# EUROPÄISCHE PATENTSCHRIFT

(11) **EP 1 060 659 B1**
(45) Veröffentlichungstag und Bekanntmachung des Hinweises auf die Patenterteilung: **08.06.2005**
(21) Anmeldenummer: 99111707.8
(22) Anmeldetag: 17.06.1999
(51) Int. Cl.: A01K 1/015

(54) **Einstreumaterial für Tiere und Verfahren zur Herstellung eines solchen Einstreumaterials**
Animal litter and process for manufacturing the same
Litière pour animaux et procédé pour sa fabrication

(43) Veröffentlichungstag der Anmeldung: 20.12.2000
(73) Patentinhaber: Raiffeisen-Waren-Zentrale Rhein-Main e.G., 50668 Köln (DE)
(72) Erfinder: Gaese, Dr.Dagmar, 51503, Rösrath (DE); Schilling, Prof.Dr.Ehrhard, 50968, Köln (DE); Wödy, Dipl.Ing.Klaus, 50937, Köln (DE)
(74) Vertreter: Sroka, Peter-Christian, Dipl.-Ing.

(56) Entgegenhaltungen:
- EP-A- 0 310 016
- DE-A- 4 201 410
- GB-A- 2 252 709
- US-A- 4 258 660

## Beschreibung

Die Erfindung betrifft ein Einstreumaterial für Tiere, bestehend aus zu Briketts und/oder Pellets verdichtetem, zerkleinertem Strohmaterial. Der Begriff "Stroh" bzw. "Strohmaterial" umfaßt die als "nachwachsende Rohstoffe" bezeichneten trockenen Stengel und Blätter von Getreide, Hülsenfrüchten, Ol- und sonstigen Faserpflanzen.

Bei einem in der GB 2 252 709 A beschriebenen Verfahren zur Herstellung von Einstreumaterial aus Stroh für Tiere wird das Stroh gehäckselt und z. B. mittels einer Hammermühle zermahlen, um beispielsweise ein 7-10 mm-Sieb passieren zu können. Dieses Material wird komprimiert bzw. pelletiert, um dann zu Granulaten zerkleinert zu werden. Die erhaltenen Granulate werden gesiebt oder es erfolgt eine Absaugung, um ein möglichst staubfreies Produkt zu erhalten, ohne daß durch dieses Sieben oder Absaugen die in den einzelnen Granulaten vorhandenen Staubpartikel aus diesen entfernt werden können. Das Produkt wird vor oder nach dem Pelletieren mit einer starken Lauge wie Natriumhydroxid behandelt, um Verunreinigungen oder sonstige schädliche biologische Substanzen zu beseitigen und/oder zu inaktivieren bzw. zu zerstören.

Ein in der EP 0 310 016 B1 (= US 4 924 808) beschriebenes Einstreumaterial für Kleintiere besteht zumindest überwiegend aus gepreßtem Strohmehl, wobei das Strohmehlmaterial aus unregelmäßigen Bruchstücken von Strohmehlbriketts besteht. Bei der Herstellung dieses Einstreumaterials für Kleintiere wird Stroh zu Mehl vermahlen bzw. feinvermahlen, und das so erhaltene Mehl wird durch Pressung zu Strohmehlbriketts verdichtet, die man anschließend zu Bruchstücken mit unregelmäßiger Außenfläche zerteilt.

Der bei der Brikettherstellung anfallende, für Tiere gesundheitsschädliche Staub wird abgesiebt und pneumatisch abgeleitet und gegebenenfalls wieder der Verdichtungs- bzw. Brikettierungsstation zugeführt.

An Einstreumaterial für Tiere, unabhängig ob für Klein- oder Großtiere, werden im wesentlichen folgende Anforderungen gestellt:
(1) hohe Saugfähigkeit für Flüssigkeiten;
(2) hohes Flüssigkeits-Rückhaltevermögen über die Zeit;
(3) geringer Staubanteil;
(4) gute Entsorgungsmöglichkeit.

Während bei den bekannten Einstreumaterialien die Forderungen gemäß den Punkten (3) und (4) als hinreichend gelöst angesehen werden können, bestehen bezüglich der Forderungen (1) und (2) gewisse Defizite, die durch die Vermahlung, insbesondere Feinvermahlung des Strohes bedingt sind.

Der Erfindung liegt die Aufgabe zugrunde, ein auf der Basis von Stroh hergestelltes Einstreumaterial zu schaffen, welches verglichen mit den bekannten Einstreumaterialien beine erhöhte Saugfähigkeit und ein über die Zeit betrachtetes erhöhtes Rückhaltevermögen für Flüssigkeit aufweist.

Diese Aufgabe wird mit einem Einstrenmaterial gemäß Patentanspruch 1 und durch ein Verfahren gemäß Patentanspruch 4 gelöst.

Der Begriff "Strohfasergebilde" umfaßt dabei auch mehrere nebeneinanderliegende einzelne Strohfasern, die während des Zerfaserungsvorganges in Faserlängsrichtung nicht oder zumindest auch nicht vollständig voneinander gelöst worden sind.

Aufgrund dessen, daß das Stroh bzw. Halmgut mechanisch zerfasert wird, ist gewährleistet, daß anders als bei einer Vermahlung bzw. Feinvermahlung ein Großteil der Halmgutzellen nicht aufgebrochen wird. Damit besteht die Möglichkeit, daß die einzelne intakte Halmgutzelle des trockenen Strohmaterials durch ihre semipermiable Zellwand durch Osmose oder auch Knudsen'sche Molekularbewegung Flüssigkeit aufzunehmen vermag und diese Flüssigkeit über einen längeren Zeitraum speichern kann, wodurch das Flüssigkeits-Rückhaltevermögen des Einstreumaterials insgesamt verbessert wird.

Während bei Einstreumaterial, das überwiegend aus Strohmehl hergestellt ist, wobei "Mehl" per Definition in der Regel eine Partikelgröße von 50 bis µ aufweist, in dem einzelnen Brikett oder den daraus resultierenden Einstreumaterial-Bruchstücken die Packungsdichte der Mehlpartikel relativ hoch und damit das Hohlraumvolumen relativ niedrig ist, wird dieses Hohlraumvolumen bei dem Einsatz von Strohfasern bzw. Strohfaserbündeln vergrößert, was zu einer Erhöhung des Saugvermögens des einzelnen Pellets bzw. Briketts oder auch den daraus resultierenden Einstreumaterialbruchstücken führt.

Bei dem bekannten, zumindest überwiegend aus gepreßtem Strohmehl bestehendem Einstreumaterial, führt ein gegebenenfalls durch die Mahlbedingungen bedingter Strohfaseranteil_{,} der in dem Gesamthaufwerk nur in einem untergeordneten Maß vorhanden ist, nicht zu den erfindungsgemäß verbesserten Eigenschaften des Einstreumaterials.

Bei der Strohzerfaserung anfallendes staubförmiges Strohmaterial bis zu einer Partikelgröße von 50µ kann vorzugsweise vor der Verdichtung des Fasermaterials durch Absieben und/oder Absaugen abgeschieden werden. Abgesehen von einem kleineren Strohmehlanteil, der bei der Pelletierung und/oder Brikettierung als Bindemittel dient, ist es insbesondere vorteilhaft, in dem zerfaserten Strohmaterial vorhandene Strohmehlpartikel bis zu einer Größe von etwa µ, gegebenenfalls auch bis zu einer Größe von etwa µ vor der Verdichtung des Fasermaterials abzuscheiden. Für den Fall, daß die Zerfaserung des Strohs beispielsweise durch Einsatz von Kollergängen oder dergleichen erfolgt, ist es vorteilhaft, das Stroh bis zu einem Wassergehalt von 8 - 14 % zu trocknen.

Um eine ausreichend große saugfähige Oberfläche zu gewährleisten, soll die Maximalabmessung der Fasern bzw. Fasergebilde senkrecht zur Faserlängsrichtung nicht größer als 4 mm, vorzugsweise nicht größer als 2 - 2,5 mm, sein. Die Länge der einzelnen Fasern bzw. Fasergebilde kann je nach Ausgangsmaterial 100 mm oder mehr betragen.

Die Größe der einzelnen aus Strohfasermaterial gepreßten Briketts und/oder Pellets hängt im wesentlichen von dem beabsichtigten Einsatzzweck, entweder für Groß- oder Kleintiere, ab. So können die einzelnen Pellets oder Briketts eine Länge von bis zu 20 - 40 mm und einen Durchmesser bis zu 10 - 15 mm haben, wobei auch eine weitere Zerkleinerung zu Bruchstücken denkbar ist.

Infolge des überwiegenden Einsatzes von Strohfasern ist auch sichergestellt, daß das mit Feuchtigkeit vollgesogene Material nicht dazu neigt, eine breiige oder sumpfartige Konsistenz anzunehmen, die das Entsorgen des Einstreumaterials aus dem Tierkäfig oder Tierstall erschwert.

## Patentansprüche

1. Einstreumaterial für Tiere, bestehend aus zu Pellets bzw. zu Briketts verdichtetem, zerkleinertem Strohmaterial, **dadurch gekennzeichnet, daß** es überwiegend aus mechanisch zerfasertem Strohmaterial mit einer Länge der einzelnen Strohfasern bzw. Strohfasergebilde bis zu 100 mm und einer Maximalabmessung senkrecht zur Faserlängsrichtung von 4 mm besteht.

2. Verfahren zur Herstellung von Einstreumaterial für Tiere aus zu Pellets bzw. Briketts verdichtetem zerkleinerten Strohmaterial, **dadurch gekennzeichnet, daß** man überwiegend mechanisch zu Strohfasern bzw. Strohfasergebilden zerfasertes Strohmaterial mit einer Länge der einzelnen Strohfasern bzw. Strohfasergebilde bis zu 100 mm und einer Maximalabmessung senkrecht zur Faserlängsrichtung von 4 mm verwendet.

3. Verfahren nach Anspruch 2, **dadurch gekennzeichnet, daß** man bei der Strohzerfaserung anfallendes staubförmiges Strohmaterial vor der Verdichtung des Fasermaterials abscheidet.

4. Verfahren nach Anspruch 3, **dadurch gekennzeichnet, daß** man staubförmiges Strohmaterial bis zu einer Partikelgröße von etwa 50µ abscheidet.

5. Verfahren nach Ansprüche 3 oder 4, **dadurch gekennzeichnet, daß** man das Stroh vor der Zerfaserung bis zu einem Wassergehalt von 8 bis 14 % trocknet.

6. Verfahren nach Anspruch 3, bei dem man überwiegend Fasern bzw. Fasergebilde, deren Maximalabmessung senkrecht zur Faserlängsrichtung 2 bis 2,5 mm beträgt, zu Pellets und/oder Briketts verdichtet.

7. Verfahren nach Anspruch 3, bei dem man überwiegend Fasern bis zu einer Länge von 60 mm zu Pellets und/oder Briketts verdichtet.

8. Verfahren nach Anspruch 3, bei dem man vor der Verdichtung des Fasermaterials bei der Strohzerfaserung anfallendes mehlförmiges Strohmaterial bis auf einen kleineren Strohmehl-Restanteil absaugt, der bei der Pelletierung und/oder Brikettierung als Bindemittel wirksam ist.

## Claims

1. Litter material for animals, comprising straw material which has been reduced to small pieces and compressed into pellets resp. briquettes, **characterised in that** it primarily comprises straw material which has been defibrated mechanically into fibres and has a length of the individual straw fibres or straw fibrous structures of up to 100 mm and a maximum dimension perpendicular to the longitudinal direction of the fibres of 4 mm.

2. A method of producing litter material for animals comprising straw material which has been reduced to small pieces and compressed into pellets resp. briquettes, **characterised in that** straw material is used which has been defibrated mechanically primarily into straw fibres resp. straw fibrous structures and has a length of the individual straw fibres resp. straw fibrous structures of up to 100 mm and a maximum dimension perpendicular to the longitudinal direction of the fibres of 4 mm.

3. A method according to Claim 2, **characterised in that** dusty straw material which is produced during the defibration of the straw into fibres, is separated off before the fibre material is compressed.

4. A method according to Claim 3, **characterised in that** dusty straw material having a particle size of up to approximately 50 µm is separated off.

5. A method according to Claim 3 or 4, **characterised in that** the straw, before it is defibrated into fibres, is dried up to a water content of 8 to 14 %.

6. A method according to Claim 3, wherein primarily fibres resp. fibrous structures, of which the maximum dimension perpendicular to the longitudinal direction of the fibres is 2 to 2.5 mm, are compressed into pellets and/or briquettes.

7. A method according to Claim 3, wherein primarily fibres having a length of up to 60 mm are compressed into pellets and/or briquettes.

8. A method according to Claim 3, wherein, before the fibre material is compressed, powdery straw material which is produced during the defibration of the straw into fibres, is drawn off by suction to leave a smaller residual part of straw powder which is effective as a binder during pelletizing and/or briquetting.

## Revendications

1. Matière de litière pour animaux, composée de paille réduite en petits morceaux et comprimée en pellets respetivement en briquettes, **caractérisée en ce qu'**elle est constituée essentiellement de paille éffilée mécaniquement en fibres de paille ou des structures de fibres de paille, dont la longueur ne dépasse pas 100 mm et dont la mesure maximale perpendiculaire au sens de la longueur des fibres ne dépasse pas 4 mm.

2. Procédé de fabrication de la matière de litière pour animaux, constituée de la matière de paille reduite en petits morceaux et comprimé en pellets respectivement en briquettes, **caracterisée en ce que** l'on utilise essentiellement de la matière de paille effilée mécaniquement en fibres de paille respectivement en structures de fibres de paille, dont la longueur des fibres de paille respectivement des structures de fibres de paille ne dépasse pas 100 mm et dont la mesure maximale perpendiculaire au sens de la longueur des fibres ne dépasse pas 4 mm.

3. Procédé selon la revendication n° 2, **caractérisée en ce que** l'on sépare la matière de paille poussiéreuse produite lors de l'effilage de la paille avant la compression de la matière de fibres.

4. Procédé selon la revendication n° 3, **caractérisée en ce que** l'on sépare la matière de paille poussiéreuse jusqu'à une taille de particules d'environ 50 µ.

5. Procédé selon la revendication n° 3 ou n° 4, **caractérisée en ce que** l'on assèche la paille avant de l'effiler, afin d'atteindre une teneur en eau de 8 à 14 %.

6. Procédé selon la revendication n° 3, pour lequel on comprime en pellets respectivement en briquettes essentiellement des fibres respectivement des structures de fibres dont la mesure maximale perpendiculaire au sens de la longueur des fibres ne dépasse pas 2 à 2,5 mm.

7. Procédé selon la revendication n° 3, pour lequel on comprime en pellets respectivement en briquettes essentiellement des fibres jusqu'à une longueur de 60 mm.

8. Procédé selon la revendication n° 3, pour lequel on aspire, avant la compression de la matière de fibres, de la matière de paille farineuse produite lors de l'effilage de la paille jusqu'a un moindre part résiduel de la farine de paille qui est effectif comme liant lors de la pelletisation et/ou l'agglomération.
